# EUROPÄISCHE PATENTSCHRIFT

(11) **EP 2 408 649 B1**
(45) Veröffentlichungstag und Bekanntmachung des Hinweises auf die Patenterteilung: **12.10.2016**
(21) Anmeldenummer: 10710248.5
(22) Anmeldetag: 18.03.2010
(51) Int. Cl.: B60R 13/02

(54) **HALTEPROFIL UND VERBUNDTEIL ZUR VERKLEIDUNG VON KRAFTFAHRZEUGINNENRÄUMEN**
RETAINING PROFILE AND COMPOSITE PART FOR LINING A MOTOR VEHICLE INTERIOR
PROFILÉ DE RETENUE ET PIÈCE COMPOSITE POUR L'HABILLAGE D'UN INTÉRIEUR DE VÉHICULE AUTOMOBILE

(30) Priorität: 18.03.2009 DE 102009013862; 18.03.2009 DE 102009013863; 27.07.2009 EP 09075335
(43) Veröffentlichungstag der Anmeldung: 25.01.2012
(73) Patentinhaber: Faurecia Innenraumsysteme GmbH, 76767 Hagenbach (DE)
(72) Erfinder: SCHÄFER, Frank, 76872 Steinweiler (DE); BRADFISCH, Karsten, F., 66955 Pirmasens (DE); REISS-SEIFRIED, Heike, 76437 Rastatt (DE)
(74) Vertreter: Pfenning, Meinig & Partner mbB
(86) Internationale Anmeldenummer: PCT/EP2010/001890
(87) Internationale Veröffentlichungsnummer: WO 2010/105855

(56) Entgegenhaltungen:
- EP-A1- 1 258 295
- DE-A1-102004 053 133
- US-A1- 2007 193 198
- US-A1- 2008 217 943

## Beschreibung

Gegenstand der Erfindung ist ein Verfahren zur Herstellung eines Verbundteils sowie ein Verbundteil mit einer ersten Haut, einer zweiten Haut und einem mit der ersten und zweiten Haut mittels jeweils einer Naht verbundenen Halteprofil sowie ein Halteprofil für ein derartiges Verfahren bzw. Verbundteil.

Entsprechend dem Stand der Technik besteht, insbesondere bei höherwertigen Kraftfahrzeugen, der Bedarf, Oberflächenbezüge aus hochwertigen Materialien wie etwa Leder zur Verkleidung des Innenraums zur Verfügung zu stellen. Ein derartiger Oberflächenbezug ist beispielsweise aus der, gattungsbildenden DE 10 2004 053 133 A1 bekannt. Der dort vorgestellte Überzug weist eine erste und eine zweite Haut auf, welche mittels einer Funktionsnaht miteinander verbunden sind. Die miteinander verbundenen ersten und zweiten Häute sind zusätzlich mittels Ziernähten mit einem Halteprofil vernäht, wobei das Halteprofil einen an der Unterseite des Halteprofils angeordneten Zapfen aufweist. Das aus den Häuten und dem Halteprofil bestehende Verbundteil wird mit einem Träger verbunden, wobei der Zapfen des Halteprofils in eine Ausnehmung des Trägers eingreift. Nachteilig an dem dort vorgestellten Verbundteil ist, dass die erste und zweite Haut vor dem Einbringen der Ziernähte mithilfe beispielsweise eines Klebeprozesses mit dem Halteprofil verbunden werden müssen. Zudem sind zur Ausrichtung der Position der ersten und zweiten Naht bzw. der Funktionsnaht auf dem Halteprofil Nahtschwerter notwendig, welche unter hohem Aufwand nach CAD-Daten gefräst werden müssen. Zudem gestaltet sich die korrekte Positionierung der ersten und zweiten Haut vor dem Einbringen der Ziernähte und vor dem stoffschlüssigen Verbinden mit dem Halteprofil als schwierig.

Eine Weiterbildung findet sich in der EP 1 816 018 A1. Das dort offenbarte Verbundteil weist zumindest eine erste und eine zweite mit der ersten verbundene Haut auf, welche jeweils mit einem Halteprofil verbunden werden. Das Halteprofil weist im Wesentlichen senkrecht zur Naht verlaufend zahnartige Profilierungen auf, welche beim Verbinden der ersten bzw. der zweiten Haut mit dem Halteprofil dieses hintergreifen und ein vorhergehendes stoffschlüssiges Verbinden zwischen der ersten bzw. zweiten Haut und dem Halteprofil entfallen kann. Dies hat den Vorteil, dass die Nähte bei Fehlstellungen wieder aufgetrennt werden können. Eine stoffschlüssige Verbindung zwischen dem Halteprofil und der ersten bzw. zweiten Haut wird erst nach dem Vernähen der ersten bzw. zweiten Haut mit dem Halteprofil vorgenommen. Nachteilig an der in der EP 1 816 018 A1 vorgestellten Lösung zum Verbinden einer ersten und einer zweiten Haut mit einem Halteprofil ist es, dass zur Positionierung der ersten und zweiten Haut auf dem Halteprofil weiterhin ein Nahtschwert notwendig ist. Zudem ist die präzise Justage des Nahtverlaufs auf dem Halteprofil schwierig.

Ein weiteres Verbundteil wird in der US2008/0217943 offenbart. Das Verbundteil umfasst eine erste und eine zweite Haut, welche in einer Nut eines Halteprofils angeordnet sind. Durch die Seitenwände des Halteprofils und einen Endabschnitt der ersten und zweiten Haut wird eine Naht eingebracht, welche zugleich als Funktions- und als Ziernaht des Verbundteils dient. Um eine Funktions- und Ziernaht einzubringen muss das Halteprofil deutlich aus dem Träger ragen, so dass sich das Problem des Herstellens einer flachen Naht nicht zufriedenstellend lösen lässt. Zudem ist auch hier die präzise Justage des Nahtverlaufs schwierig, da das Halteprofil aus dem Träger ragt.

Aufgabe der vorliegenden Erfindung ist es, ein Verfahren zur Herstellung eines Verbundteils sowie ein Verbundteil, ein Halteprofil und eine im Verfahren eingesetzte Nähvorrichtung zu verbessern, so dass die aufgeführten Nachteile vermieden werden.

Die Erfindung wird mithilfe eines Halteprofils mit den Merkmalen des Anspruchs 1, eines Verfahrens mit den Merkmalen des Anspruchs 4 sowie eines Verbundteils mit den Merkmalen des Anspruchs 12 gelöst.

Verschiedene Ausführungsformen werden in den untergeordneten Ansprüchen und den Ausführungsbeispielen aufgeführt.

Das erfindungsgemäße Verbundteil weist ein erfindungsgemäßes Halteprofil mit einer sich in einer ersten Richtung erstreckenden Nut auf, wobei jeweils ein Endabschnitt einer ersten und ein Endabschnitt einer zweiten Haut in der Nut angeordnet sind. Der Endabschnitt der ersten Haut und der Endabschnitt der zweiten Haut werden zunächst in diese sich in einer ersten Richtung erstreckende Nut des Halteprofils eingeführt. Die erste Richtung wird durch den Verlauf der Naht bestimmt, d.h. falls das Halteprofil gekrümmt wird, wird auch die erste Richtung "gekrümmt".

Mithilfe der Nut können die Endabschnitte der ersten und zweiten Haut gehalten und/oder geführt werden, wodurch die eigentliche Positionierung der ersten und zweiten Haut auf dem Halteprofil selbst stark vereinfacht wird. Die Nut erstreckt sich dabei vorzugsweise über die gesamte Länge des Halteprofils in der ersten Richtung. Die erste und zweite Haut können mit einer ersten Funktionsnaht verbunden sein, wobei die Funktionsnaht nur mit der ersten und zweiten Haut verbunden ist.

Anschließend kann das Halteprofil, welches mit einem, bevorzugt zwei, sich von dem offenen Ende der Nut und der Seitenwände aus in einer zweiten, zur ersten Richtung des Nutverlaufs im Wesentlichen senkrecht stehenden, Richtung erstreckenden Flügel ausgebildet ist, mit den verbundenen Häuten beispielsweise auf einem Träger angeordnet werden, wobei das Halteprofil mit dem Träger formschlüssig oder stoffschlüssig verbunden wird. Anschließend können die Häute auch ohne eingebrachte Zier- oder Dekornähte auf den Träger kaschiert werden. Der Verlauf der Naht ist durch die Funktionsnaht, das Halteprofil und einer zum Halteprofil korrespondierenden Ausnehmung vorgegeben. Dabei ist es bevorzugt, wenn das Halteprofil flexibel oder krümmbar ist und sich so an den Verlauf der Ausnehmung des Trägers anpasst.

Der mindestens eine Flügel des Halteprofils dient der Verbindung zwischen einem an den Endabschnitt anschließenden Teilabschnitt der ersten bzw. zweiten Haut mit einem ersten bzw. zweiten des mindestens einen Flügels des Halteprofils mittels einer ersten bzw. zweiten Naht. Die erste und zweite Naht umfassen dabei zumindest ein Garn. Dies bedeutet insbesondere, dass die Verbindung zwischen dem Endabschnitt der ersten bzw. zweiten Haut und dem ersten bzw. zweiten Flügel derart ist, dass mindestens ein Garn den ersten bzw. zweiten Flügel von einer Sichtseite der ersten bzw. zweiten Haut aus betrachtet zumindest abschnittsweise hintergreift. Bei der ersten und zweiten Naht handelt es sich bevorzugt um Dekor- oder Ziernähte.

Das Vorhandensein zweier Flügel ist notwendig, wenn eine erste bzw. zweite Naht auf beiden Seiten der Verbindungsstelle der ersten und zweiten Haut eingebracht werden soll.

Da die Endabschnitte der ersten und zweiten Haut jeweils in der Nut geführt bzw. gehalten sind, muss lediglich eine Lage der ersten bzw. zweiten Haut mit dem ersten bzw. zweiten Flügel vernäht werden. Dies reduziert die Menge des zu verwendenden Materials der ersten und zweiten Haut. Des Weiteren wird die zum Einbringen der Naht aufzuwendende Kraft verringert, da lediglich eine Lage der ersten bzw. zweiten Haut durchstoßen werden muss.

Es bedarf keines vorherigen Verklebens zwischen dem Halteprofil und der ersten bzw. zweiten Haut. Auch das Mitnähen eines Nahtbandes, wie in vorhergehenden Verfahren erforderlich, kann entfallen. Aufgrund der Tiefe und der Breite der Nut können die erste bzw. zweite Haut beispielsweise leicht eingeklemmt oder locker in der Nut gehalten werden. Hierdurch ist es möglich, die Form bzw. die Optik der von der Sichtseite der ersten bzw. zweiten Haut sichtbaren Verbindungsstelle zwischen der ersten und zweiten Haut zu beeinflussen.

Die Flügel erlauben eine genaue Positionierung des Halteprofils in einer Ausnehmung eines Trägers und dienen als Abstands- oder Positionshalter. Mittels der Flügel ist eine exakte Abmessung der Tiefe und Breite der Ausnehmung nicht länger notwendig, da sich die Flügel einem jeweils an einer Seitenwand der Nut angebrachten und sich gegenüberliegenden Flansch gleichend auf der sich neben der Ausnehmung befindenden und diese begrenzenden Oberfläche des Trägers abstützen.

Da die Flügel eine Materialstärke bzw. Flügelstärke aufweisen, welche kleiner als die Tiefe der Nut ist und im Bereich von weniger als 1,5 mm, vorzugsweise von weniger als 1 mm, liegt, fällt die leichte Erhebung des Halteprofils aus der Oberfläche des Trägers, welche durch den Flügel verursacht wird, nicht merklich ins Gewicht. Somit kann mit Hilfe der Flügel eine genaue, einfach zu erlangende und im Erscheinungsbild unauffällige Positionierung des Naht- bzw. Nutverlaufs erreicht werden. Die oder der Flügel sind als Erhebung insbesondere dann, wenn eine erste und eine zweite Haut im Halteprofil angeordnet sind und den Flügel sichtseitig überdecken, im Wesentlichen nicht erkennbar. Somit wird ein im Wesentlichen planer Abschluss zwischen einer sichtseitigen Trägeroberfläche und dem in einer Ausnehmung des Trägers angeordneten Halteprofil ohne aufwendige Justage bewirkt.

Mit Hilfe des erfindungsgemäßen Profils und des erfindungsgemäßen Verbundteils ist eine Zeitersparnis zwischen 20% und 80% gegenüber herkömmlichen Verfahren zur Herstellung eines Verbundteils nach dem Stand der Technik erreichbar.

Weitere Ausführungsformen können den untergeordneten Ansprüchen entnommen werden.

In einer Ausführungsform der Erfindung hintergreift eine zusätzlich zu einer ersten in den Flügel eingebrachten Naht erste Funktionsnaht mindestens eine Seitenwand der Nut des Halteprofils. Hierdurch wird eine formschlüssige Verbindung zwischen der ersten und/oder zweiten Haut und dem Halteprofil hergestellt. Prozesstechnisch ist es besonders einfach, wenn die erste Funktionsnaht zwei sich gegenüberliegende und die Nut begrenzende Seitenwände hintergreift, wobei die erste und die zweite Haut durch die erste Funktionsnaht zumindest punktuell durchstoßen werden.

In einer weiteren Ausführungsform weist das Verbundteil eine zweite die erste und zweite Haut verbindende Funktionsnaht auf, welche von einer Sichtseite des späteren auf einen Träger angeordneten Verbundteils oberhalb der ersten Funktionsnaht angeordnet ist. Oberhalb bedeutet hierbei, dass die zweite Funktionsnaht von der Sichtseite her betrachtet näher liegt als die erste Funktionsnaht. Die zweite Funktionsnaht ist für den Betrachter sichtbar angeordnet und wird von einem Betrachter als die eigentliche die erste und zweite Haut verbindende Funktionsnaht wahrgenommen, da die unterhalb dieser zweiten Funktionsnaht liegende erste Funktionsnaht von der zweiten Funktionsnaht überdeckt wird. Die erste und die zweite Funktionsnaht können im Wesentlichen gleichzeitig oder innerhalb eines einzigen Arbeitsgangs eingebracht werden, was den Arbeitsaufwand reduziert.

Prozesstechnisch ist es bevorzugt, wenn die erste und die zweite Haut mit einer zwischen dem Teilabschnitt und dem Endabschnitt angeordneten Funktionsnaht miteinander verbunden werden, wobei die Verbindung vorzugsweise vor dem Einführen der Endabschnitte in die Nut hergestellt wird. Hierdurch kann insbesondere die Zeit, welche zum Einbringen der ersten und zweiten Haut in die Nut benötigt wird, reduziert werden. Zudem kann die Funktionsnaht derart in der Nut liegend angeordnet werden, dass die Funktionsnaht zumindest ansatzweise als Verbindung zwischen der ersten und zweiten Haut von der Sichtseite der ersten und zweiten Haut her sichtbar ist.

Die im vorhergehenden Abschnitt beschriebene Funktionsnaht ist von der im vorhergehenden Abschnitt beschriebenen erste und zweiten Funktionsnaht verschieden, da sie unabhängig von diesen eingebracht werden, bevor die erste und zweite Haut in die Nut geführt werden.

Bevorzugt weisen die Endabschnitte der ersten bzw. zweiten Haut eine Länge von 0,5 mm bis 3 mm auf. In einer weiteren Ausführungsform weist die Nut eine Tiefe zwischen 1 mm und 4 mm, vorzugsweise zwischen 1,2 mm und 2,5 mm, auf und kann die Endabschnitte und die Funktionsnaht aufnehmen, ohne dass die Endabschnitte den Boden der Nut berühren. Hierdurch werden Aufwellungen der ersten und zweiten Haut im Bereich der Nut vermieden. Die Endabschnitte können jedoch auch derart in die Nut eingeführt sein, dass einer oder beide Endabschnitte am Boden der Nut aufliegen.

Nachfolgend werden bevorzugte Materialstärken der Komponenten des Halteprofils angegeben.

Die Flügelstärke bzw. Wandstärke der Flügel beträgt zwischen 0,05mm und 1mm, vorzugsweise zwischen 0,2mm und 0,6mm und besonders vorzugsweise zwischen 0,35mm und 0,5mm. Die Wandstärke wird hierbei in derselben Richtung wie die Tiefe der Nut gemessen, d.h. einer im Wesentlichen senkrecht zur ersten Richtung und von der zweiten Richtung verschiedene, bevorzugt im Wesentlichen senkrecht zur zweiten Richtung stehenden, dritten Richtung gemessen.

Die Wandstärke wird bevorzugt derart gewählt, dass die maximale Haltekraft einer den Flügel und eine Haut verbindenen Naht größer ist als die zum Abriss eines Flügels in die dritte Richtung gerichteten Reißkraft. Dies birgt Vorteile beim Versuch des Herausziehens eines Halteprofils aus einer Ausnehmung eines Trägers (z.B. bei nachträglich erkannter Qualitätsmängel), da bei zu großer Belastung das wesentlich kostengünstigere Halteprofil vor der Ziernaht reißt und die Haut nicht beschädigt wird. Als maximale Reißkraft wird beispielsweise eine Reißkraft von 15N ausgewählt, d.h. wirkt ein Zug von mehr als 15 N auf einen Flügel reißt dieser vom Halteprofil ab.

Die Breite eines Flügels entlang der zweiten Richtung beträgt gemessen von der Innenseite der Seitenwand der Nut zum äußeren Rand des Flügels hin zwischen 2mm und 7mm, bevorzugt zwischen 2,5mm und 5mm. Die Wandstärke einer die Nut begrenzenden Seitenwand entlang der zweiten Richtung beträgt zwischen 0,2mm und 2mm, wobei die Breite des Flügels derart gewählt ist, dass dieser sich flanschartig an die Seitenwand anschließt, d.h. der Flügel breiter als die Breite der Seitenwand ist. Und so als Flansch dienen kann. Die Breite der Nut entlang der zweiten Richtung beträgt gemessen zwischen den die Nut begrenzenden Innenseiten der Seitenwände zwischen 1mm und 4mm, bevorzugt zwischen 1,5mm und 3mm. Der die Nut nach unten hin begrenzende Boden weist eine Dicke im Bereich zwischen 0,1 mm und 2mm auf. Eine von der Außenseite der Seitenwände gemessene Breite der Nut beträgt somit zwischen 1,4mm und 8mm.

In einer weiteren Ausführungsform, insbesondere in Hinblick auf die industrielle Herstellung eines erfindungsgemäßen Verbundteils, wird das Halteprofil in einer Stichplatte einer Nähvorrichtung geführt und/oder gehalten. Die Stichplatte weist dabei einen sich in der ersten Richtung erstreckenden Kanal zur Führung des Halteprofils auf. Die Nähvorrichtung weist zudem zwei Nadeln auf, wobei sich der Kanal zur Führung des Halteprofils zwischen den zwei Nadeln erstreckt. Die erste Nadel bringt die erste Funktionsnaht ein, wohingegen die zweite Nadel die zweite Funktionsnaht einbringt. Bevorzugt hintergreift lediglich die erste Funktionsnaht die Seitenwände der Nut. Die zweite Funktionsnaht hintergreift dementsprechend nur die erste und zweite Haut. Die zweite Nadel wird dazu in einem geringen Abstand von vorzugsweise weniger als 2mm an der offenen Seite der Nut entlang geführt.

Mithilfe der vorgenannten Stichplatte kann die Prozessgeschwindigkeit zum Herstellen eines Verbundteils aus einer ersten und zweiten Haut, welche mit einem Halteprofil über mindestens eine in der Nut angeordnete erste Funktionsnaht deutlich erhöht werden, wobei die vorgegebenen Toleranzwerte wie oben beschrieben eingehalten werden können. Optional kann zeitnah oder zeitgleich eine zweite Funktionsnaht mittels einer zweiten Nadel eingebracht werden.

In einer weiteren Ausführungsform werden die Endabschnitte der ersten und zweiten Haut mithilfe einer Mittenführung in die Nut des Halteprofils geführt und/oder in der Nut des Halteprofils gehalten. Die Verwendung einer Mittenführung, insbesondere einer beim Vorliegen einer Funktionsnaht verwendeten Nahtmittenführung, zwischen der ersten und zweiten Haut bietet sich insbesondere im Hinblick auf die maschinelle Herstellung der ersten und zweiten Naht an. Die Mittenführung wird dabei so eingestellt, dass die erste und zweite Haut sicher in der Nut gehalten sind, so dass ein anschließendes Einbringen der ersten und zweiten Naht mit einem geforderten Toleranzwert von ±1 mm, vorzugsweise ±0,5 mm, stattfinden kann. Die Mittenführung drückt dabei von der offenen Seite der Nut her die erste und zweite Haut bzw. deren Endabschnitte in die Nut.

In einer weiteren Ausführungsform und insbesondere auf die maschinelle Herstellung eines erfindungsgemäßen Verbundteils gerichtet wird das Halteprofil in einer Stichplatte einer Nähvorrichtung geführt und/oder gehalten. Die Stichplatte weist dabei einen sich in der ersten Richtung erstreckenden Kanal zur Führung des Halteprofils auf. Die Nähvorrichtung weist zudem zwei Nadeln auf, wobei sich der Kanal zur Führung des Halteprofils zwischen den zwei Nadeln erstreckt. Die optionale Mittenführung wird zwischen den beiden Nadeln mittig im Kanal zur Führung des Halteprofils angeordnet, so dass eine optionale Mittenführung ebenfalls mittig in die Nut des Halteprofils eingreifen kann. Mithilfe der vorgenannten Stichplatte kann die Prozessgeschwindigkeit zum Herstellen eines Verbundteils aus einer ersten und zweiten Haut, welche mit einem Halteprofil mittels einer ersten und zweiten Naht verbunden werden, deutlich erhöht werden, wobei die vorgegebenen Toleranzwerte wie oben beschrieben eingehalten werden können.

In einer weiteren Ausführungsform überragt die erste und zweite mit dem Halteprofil verbundene Haut das Halteprofil in der ersten Richtung. Dies bedeutet, dass das Halteprofil kürzer ist als die zwischen der ersten und zweiten Haut entstehende Verbindungslinie, wobei die Verbindungslinie vorzugsweise durch eine Funktionsnaht gegeben ist. Hierdurch wird es beim späteren Anordnen des Verbundteils auf einem Träger leichter, die das Halteprofil überragenden Randbereiche der ersten und zweiten Haut mit dem Träger entsprechend zu verbinden. Um beim Verfahren zur Herstellung des Verbundteils das Überragen der ersten und zweiten Haut zu gewährleisten, werden zunächst die erste und zweite Haut derart in ein erstes Ende des Halteprofils eingeführt, dass die erste und zweite Haut das erste Ende bereits zu Beginn eines Nähvorgangs überragen. Anschließend wird das Halteprofil beispielsweise in eine erfindungsgemäße Nähvorrichtung eingelegt und eine erste und zweite Naht zur Verbindung des Halteprofils mit der ersten und zweiten Haut eingebracht.

In einer weiteren Ausführungsform wird nach dem Verbinden der Teilabschnitte der ersten und zweiten Haut mit dem Halteprofil dieses in eine Ausnehmung eines Trägers derart eingesetzt, dass die erste und zweite Ziernaht von der Sichtseite her sichtbar sind und das Halteprofil formschlüssig und/oder stoffschlüssig mit dem Träger verbunden wird. Beispielsweise ist es möglich, die der Innenseite der Nut abgewandte Unterseite des Halteprofils mit einem Kleber zu versehen und so eine stoffschlüssige Verbindung mit dem Träger herbeizuführen. Andererseits ist es auch möglich, das Halteprofil in eine entsprechende Ausnehmung des Trägers einzuklipsen.

Dabei weist das Halteprofil vorzugsweise an einer dem Träger zugewandten Unterseite einen Zapfen auf, wobei der Zapfen in die Ausnehmung des Trägers eingreift und vorzugsweise mindestens einen Anker zur verbesserten Halterung des Halteprofils aufweist. Mithilfe eines Ankers kann eine verbesserte formschlüssige Klemmwirkung des Zapfens in der Ausnehmung des Trägers erreicht werden. Hierbei ist es möglich, dass die Ausnehmung des Trägers gestuft ist, d. h. eine erste Stufung das eigentliche Halteprofil aufnimmt und die zweite weiter in den Träger ragende Stufung den Zapfen aufnimmt.

Ein etwaiger Zapfen weist entlang der im vorhergehenden Abschnitt beschriebenen dritten Richtung von der Unterseite des Bodens der Nut an gemessen ein Länge zwischen 2mm und 6mm auf. An dem Zapfen angeordnete Anker weisen eine in der zweiten Richtung gemessene Breite auf, welche vorzugsweise derart gewählt ist, dass ein Ankerarm des Ankers die Außenseite der Seitenwand der Nut zwischen 0,1mm und 1mm, überragt.

In einer weiteren Ausführungsform weisen die mindestens zwei Flügel des Halteprofils eine Vielzahl von Zähnen und/oder Schlitzen auf. Alternativ können in den Flügel rhombenförmige Ausschnitte eingebracht werden. Hierbei verlaufen die Zähne bzw. die Schlitze oder Rhombenausschnitte der Flügel quer zur ersten Richtung der Nut. Aufgrund der Schlitze bzw. der Zähne ist es möglich, das Halteprofil entsprechend leicht zu krümmen, wobei Krümmungsradien bis zu 30 mm möglich sind. Hierdurch kann auf einfache Weise ein komplizierter Nahtverlauf, welcher Krümmungen aufweist, erstellt werden. Die Geometrie des Nahtverlaufs wird dabei durch den Zuschnitt der ersten und zweiten Haut vorgegeben.

Es ist bevorzugt, wenn das Halteprofil aus einem vorzugsweise extrudierten Kunststoff besteht und eine Shore-Härte zwischen 25 und 100, vorzugsweise zwischen 40 und 70, aufweist. Ein aus einem dementsprechenden Kunststoff hergestelltes Halteprofil weist die notwendige Weichheit zum Erstellen komplizierter gekrümmter Nahtverläufe auf. Zudem ist es mittels des Extrusionsverfahrens möglich, beliebig lange Halteprofile herzustellen, wobei die erste Richtung des Halteprofils im Wesentlichen mit der Extrusionsrichtung übereinstimmt.

Besonders bevorzugt ist eine Shore A Härte des Halteprofils von > 50, wenn die erste und/oder zweite Haut eine Shore A Härte von < 50 besitzen, um die Sicherheitsauflagen zur Vermeidung von Kopfverletzungen zu erfüllen. Die Messung der Shore A Härte kann mittels eines dynamischen Tests nach der Norm European "Commision for Europe (ECE) R21 Annex 4" vorgenommen werden.

Alternativ können die Flügel des Halteprofils über Textil-, Vlies- oder Gewirkefahnen realisiert sein, im Gegensatz zu einem einstückig mittels Extrusion hergestellten Halteprofils. Die Flügel werden dabei beispielsweise angeklebt oder angeschweißt.

Besonders bevorzugt werden als erste und/oder zweite Haut Materialien wie Leder, Kunstleder, Kunststoffe wie z. B. Alcantara oder Gewebe oder Gewirke verwendet. Als Träger kommen Träger mit einem Abstandsgewirke, frontgeschäumte Träger oder hartkaschierte Träger aus Kunststoffen oder Gewirken in Frage, wobei der Träger eine das Halteprofil aufnehmende Schiene aufweisen kann.

Eine besonders vorteilhafte Weiterbildung sieht vor, dass das Halteprofil und/oder Teile der Endabschnitte in einem definierten Abstand zum Verlauf der ersten Funktionsnaht gekürzt werden.

Dieses Kürzen kann parallel zum Einbringen von Funktionsnähten oder auch nachfolgend erfolgen.

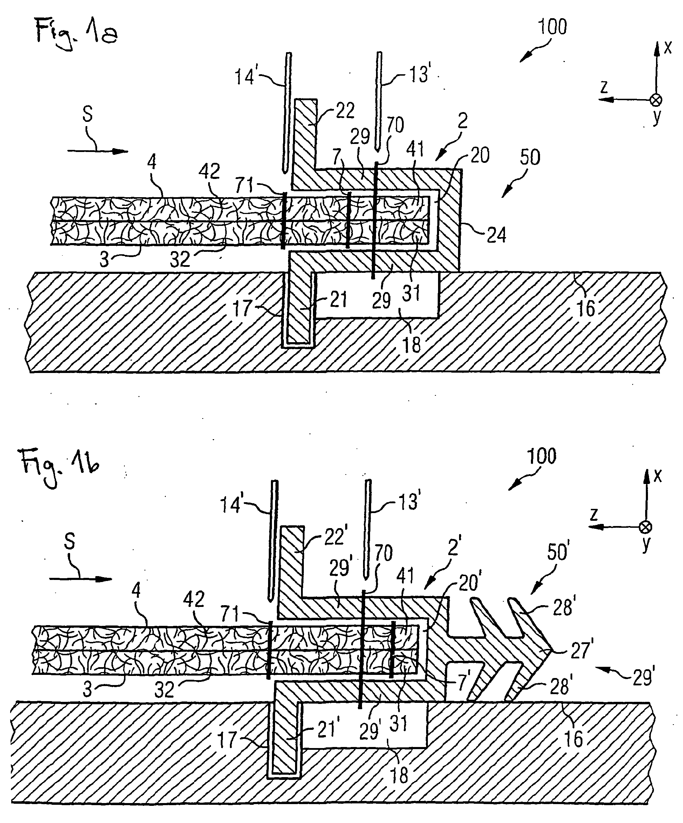

In einer bevorzugten Ausführungsform wird, wie in Fig. 1a gezeigt, ein Bauteil, welches zwei aufeinanderliegende Endabschnitte aufweist, die in einer Nut eines Halteteils untergebracht sind, durch eine Nähmaschine geführt.

Diese Nähmaschine ist so gestaltet, dass sie eine Stichplatte aufweist mit einem Transporteur zum Weitertransport des Bauteils beim Nähen. Außerdem kann zusätzlich (oder alternativ zu einem Transporteur) ein Transportrad vorgesehen sein.

Essentiell ist jedoch, dass zumindest eine Nadel vorgesehen ist, die das Halteteil mit den beiden Endabschnitten verbindet. Parallel zu dieser Naht wird dann ein Schnittmesser geführt (s. auch Fig. 1a), damit in einem definierten Abstand zur Funktionsnaht ein gerader Abschluss gegeben ist. Hierdurch wird zum einen erreicht, dass ein glatter Abschluss gegeben ist, außerdem wird sichergestellt, dass auf jeden Fall die Endabschnitte sowie das Halteteil miteinander verbunden sind, so dass es hier nicht zu Ablösungen kommen kann. Der Abstand von der Schnittkante (parallel zur Naht gesehen) kann hierbei sehr klein sein (beispielsweise im Bereich zwischen 0,8 und 5 mm, vorzugsweise zwischen 0,9 und 3 mm, besonders vorzugsweise zwischen 1 und 2 mm).

Eine entsprechende Nähmaschine würde also enthalten: mindestens eine Nadel zum Einbringen jeweils einer Naht sowie einer Stichplatte zum Führen eines zu erstellenden Verbundteils, wobei die Nähvorrichtung eine Nadel aufweist zur Verbindung eines Halteteils einerseits mit zwei Enden eines Dekorteils andererseits. Zum Transport kann hierbei ein Rad gegeben sein, welches auf dem oberen der beiden Endabschnitte abrollt, alternativ ein Transporteur (dies bevorzugt bei Ausführungsvarianten, bei denen die Halteelemente und/oder die Endabschnitte noch "Flügel" haben).

Diese Ausführungsform des Verbundteils hat Vorteile, da das Ende des Retainers (Halteprofils) während des Nähprozesses bzw. nachfolgend beschnitten wird, um eine exakte Gesamthöhe zu erreichen. Hierdurch ergibt sich eine maßmäßig exakte und außerdem gerade und fluchtende Positionierung in einem entsprechenden Träger. Hierdurch wird einerseits das äußere Erscheinungsbild eines späteren Verbundteils sehr ansehnlich. Insbesondere wird allerdings auch die Gesamthöhe beschränkt bzw. kommt es nicht notwendigerweise zu einer Erhöhung im Bereich der Naht, so dass entsprechend Bauraum gespart werden kann.

In einer weitergehenden Ausführungsform kann noch eine zweite Naht vorgesehen sein, und zwar auf der von dem Beschnitt abweisenden Seite. Diese Naht verbindet lediglich zwei Endabschnitte kurz oberhalb bzw. fluchtend mit einer Oberkante des Haltemittels. Diese Naht hat die Aufgabe, eine Funktionsnaht sichtbar zu machen und den optischen Eindruck der Funktionsnaht zu wahren. Es würde auch ausreichen, lediglich nur die dem Beschnitt nähere Naht vorzusehen, allerdings würde dann das optische Nahtbild nicht mehr sichtbar sein. Mit dieser neuen Technologie wird ein Toleranzfeld von +/-0,5 mm erreicht. Besondere Vorteile liegen darin, dass die Ausschussrate geringer wird, enge Radien (Biegungen in der Nahtlängsachse mit bis zu weniger als r = 20 mm Krümmungsradius) sind möglich. Dabei werden bevorzugt Krümmungsradien im Bereich zwischen ca. 40mm und 60mm angestrebt, da dies eine besonders gelungene Haptik aufweist. Konkave und konvexe Bereiche sind ebenfalls möglich, das Halteprofil ist universell anwendbar bei Verbundteilen, die schubweich sind (Abstandsgewirke), frontgeschäumten Trägern bzw. hartkaschierten Trägern.

Zusammengefasst kann also gesagt werden, dass insbesondere bei begrenztem Bauraum bzw. begrenzter Tiefe der Nut von entsprechenden Trägern diese vorteilhafte Variante sinnvoll ist. Dasselbe gilt zur Minimierung von auftretenden Toleranzschwankungen durch die Positionierung der Beschnitte im Nähprozess durch den jeweiligen Bearbeiter.

Als Lösungsansatz wird also zum Toleranzausgleich der Zuschnittspositionierung durch die Beschnitteinrichtung ein festes Maß ausgeglichen / korrigiert. Der Verbund aus Profil (Keder) / Dekormaterial wird im Bereich der Naht auf ein fest definiertes Längenmaß limitiert. Hierbei kann auch ein Anbringen einer Dipper-/ Wellenstruktur an den der Nut anliegenden Seiten des Profils / Keder gegeben sein.

Die Anbringung der Naht bzw. des Beschnittes kann sowohl mit einer Nähvorrichtung als Säulenmaschine oder auch als Flachbettmaschine gegeben sein.
Nachfolgend soll die Erfindung anhand einiger Ausführungsbeispiele genauer erläutert werden. Die im Rahmen der verschiedenen Ausführungsbeispiele offenbarten einzelnen Merkmale können zu weiteren Ausführungsbeispielen miteinander kombiniert werden. Es zeigen:
- Fig. 1a, 1b: nicht zur Erfindung gehörende Ausführungsformen eines Verbundteils;
- Fig. 2a, 2b: erfindungsgemäße Ausführungsformen eines Verbundteils;
- Fign. 3a, 3b: weitere erfindungsgemäße Ausführungsformen eines Verbundteils;
- Fign. 4a-c: Ausführungsformen eines Halteprofils;
- Fign. 5a-c: verschiedene Ansichten eines Halteprofils und einer Nähvorrichtung;
- Fig. 6: Ansicht der Unterseite einer Ausführungsform eines Verbundteils;
- Fign. 7a-c: verschiedene erfindungsgemäße Ausführungsformen eines Verbundteils.

Die Fig. 1a zeigt ein nicht zur Erfindung gehörendes Verbundteil 50, welches mit Hilfe einer Nähvorrichtung 100 hergestellt wird. Das Verbundteil 50 umfasst eine erste Haut 3, eine erste Haut 4 sowie eine Halteprofil 2. Das Halteprofil weist eine Nut 20 auf, welche durch Seitenwände 29 und eine als Boden dargestellte Unterseite 24 begrenzt ist. Die Nut erstreckt sich in einer ersten Richtung, welche vorliegend durch die y-Richtung gegeben ist.

Die Flügelstärke, die Tiefe der Nut sowie die Bodendicke werden vorliegend entlang der dritten Richtung z gemessen. Die Flügelbreite, die Breite der Seitenwand und die Breite der Nut werden entlang der zweiten Richtung x gemessen.

Die erste Haut 3 und die zweite Haut 4 werden vor dem Einführen der Endabschnitte 31, 41 in die Nut 20 mittels einer Funktionsnaht 7 miteinander verbunden. Die Funktionsnaht 7 wird durch das Vernähen eines Garns eingebracht und definiert die rechts der Funktionsnaht 7 liegenden Endabschnitte 31, 41 und die links der Funktionsnaht 7 liegenden Teilabschnitte 32, 42. Die Funktionsnaht 7 hilft beim Einführen der ersten und zweiten Haut und ist optional zur ersten Funktionsnaht 70 und zur zweiten Funktionsnaht 71.

Das Halteprofil 2 weist zudem zwei an die Seitenwände 29 anschließende und jeweils einen ersten Flügel 21 und einen dem ersten Flügel 21 gegenüberliegenden zweiten Flügel 22 auf, welche sich an das offene Ende der Nut anschließen. Zum Einbringen der ersten Funktionsnaht 70 und der zweiten Funktionsnaht 71 wird das Halteprofil mit den in der Nut eingebrachten Häuten 3, 4 mittels einer Stichplatte 16 geführt und gehalten. Um das Halteprofil 2 zu bewegen weist die Nähvorrichtung 100 einen an der Stichplatte 16 angeordneten Transporteur 18 auf.

Die Stichplatte 16 weist einen Kanal 17 zur Führung eines Flügels des Halteprofils auf. In der Fig. 1a wird der erste Flügel 21 im Kanal 17 geführt. Das mittels des Transporteurs 18 geführte Halteprofil wird in den Bereich einer ersten Nadel 13' und einer zweiten Nadel 14' der Nähvorrichtung 100 geführt, wobei die erste Nadel 13' zum Einbringen der ersten Funktionsnaht 70 und die zweite Nadel 14' zum Einbringen der zweiten Funktionsnaht 71 ausgebildet ist.

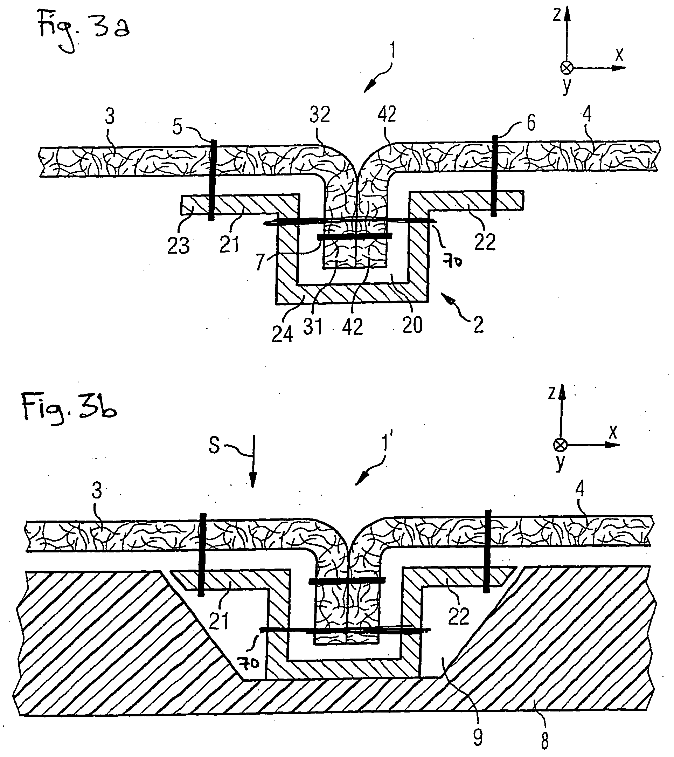

Die mittels der ersten Nadel 13' eingebrachte erste Funktionsnaht 70 hintergreift die zwei Seitenwände 29 und durchstößt die erste Haut 3 und die zweite Haut 4 punktuell, welche somit sicher in der Nut 20 gehalten sind. Die zweite Nadel 14' wird in geringem Abstand von weniger als 1mm zur offenen in der x-Richtung verlaufenden Seite der Nut geführt und verbindet lediglich die erste und zweite Haut mittels der zweiten Funktionsnaht 71, welche von der Sichtseite S aus betrachtet sichtbar ist. Obgleich das Halteprofil 2 die Flügel 21, 22 aufweist, ist es nicht notwendig die Teilabschnitte der Häute mit den entsprechenden Flügeln zu verbinden. In den Figuren 3 und folgende wird auf das Einbringen von Ziernähten eingegangen.

Das in der Fig. 1b dargestellte, ebenfalls nicht zur Erfindung gehörende Verbundteil 50' unterscheidet sich vom Verbundteil 50 lediglich durch die Verwendung eines anderen Halteprofils 2', welches einen an der Unterseite angeordneten Zapfen 27' mit Ankern 28' aufweist. Des Weiteren ist die Funktionsnaht 7 unterhalb der ersten Funktionsnaht 70 eingebracht.

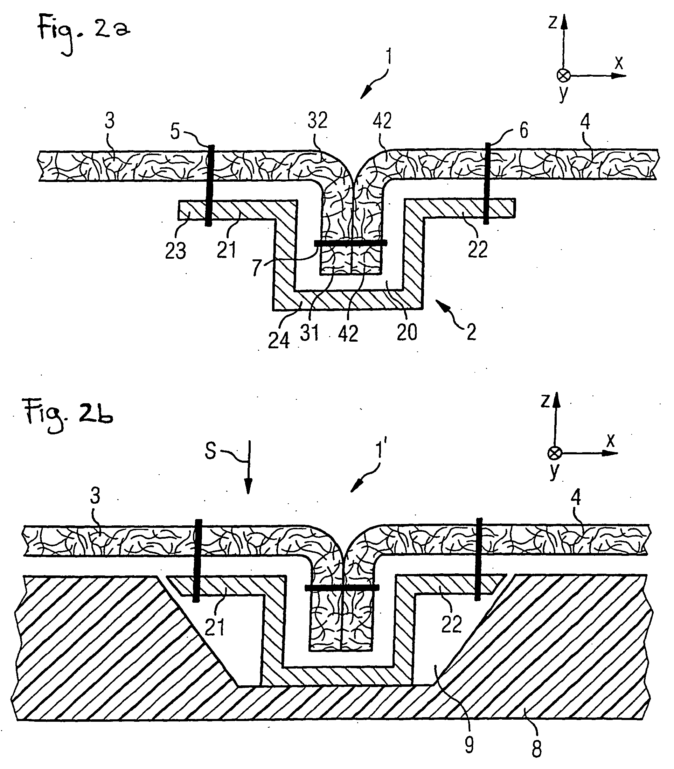

Die Fig. 2a zeigt ein Verbundteil 1, welches nach einer Variante des erfindungsgemäßen Verfahrens hergestellt wurde. Das Verbundteil 1 weist ein Halteprofil 2, eine erste Haut 3, eine zweite Haut 4 sowie eine erste Naht 5 und eine zweite Naht 6 auf. Die erste Naht 5 und die zweite Naht 6 werden nachfolgend als Ziernähte bezeichnet. Weiterhin ist eine die erste Haut 3 und die zweite Haut 4 verbindende Funktionsnaht 7 gezeigt. Die Funktionsnaht 7 ist derart angeordnet, dass sie die Endabschnitte 31 bzw. 41 der ersten Haut 3 bzw. zweiten Haut 4 und die Teilabschnitte 32 bzw. 42 der ersten Haut 3 bzw. zweiten Haut 4 voneinander trennt.

Das Halteprofil 2 weist eine Nut 20 auf, in welche die Endabschnitte 31 und 41 eingeführt sind. Auch die Funktionsnaht 7 ist derart angeordnet, dass diese innerhalb der Nut 20 liegt. An die Seitenwände der Nut 20 schließen sich ein erster Flügel 21 und ein zweiter Flügel 22 an. Die Nut 20 erstreckt sich in der ersten Richtung, welche im vorliegenden Falle die y-Richtung ist. Das Verbundteil 1 ist somit im Querschnitt der xz-Ebene gezeigt.

Nachdem die Endabschnitte 31 bzw. 41 in die Nut 20 eingeführt worden sind, werden die erste Naht 5 bzw. die zweite Naht 6 eingebracht, wodurch eine Verbindung zwischen der ersten Haut 3 und dem ersten Flügel 21 bzw. der zweiten Haut 4 und dem zweiten Flügel 22 hergestellt wird. Bei der Naht handelt es sich um eine Naht aus Garn, welche den jeweiligen Flügel jeweils zumindest abschnittsweise hintergreift. Bei dem in der Fig. 2a gezeigten Ausführungsbeispiel durchstößt eine die erste bzw. zweite Naht einbringende Nadel einer Nähvorrichtung den ersten Flügel 21 bzw. den zweiten Flügel 22, so dass die jeweilige Naht den jeweiligen Flügel zumindest abschnittsweise hintergreift. Eine vorhergehende stoffschlüssige Verbindung zwischen der ersten und zweiten Haut und dem Halteprofil 2 ist nicht notwendig, kann jedoch vorhanden sein.

Bevor die Endabschnitte 31 bzw. 41 in die Nut 20 eingeführt werden, wurde die Funktionsnaht 7 eingebracht und anschließend mithilfe eines Schnittwerkzeuges die Endabschnitte 31 bzw. 41 auf eine Länge von 1 mm gekürzt. Die Endabschnitte 31, 41 sind dabei derart gekürzt, dass diese den Boden der Nut nicht berühren, so dass keine Aufwölbung sichtbar ist.

Das Verbundteil 1 der Fig. 2a weist jeweils nur eine einzige mit dem ersten Flügel 21 bzw. zweiten Flügel 22 verbundene Lage der ersten Haut 3 bzw. zweiten Haut 4 auf. Die Ansicht einer zweilagigen Haut im Bereich der Naht kann entweder durch einen Hautüberschuss oder eine entsprechende Ausführung des ersten und zweiten Flügels erreicht werden. Beispielsweise können sich die Flügel von der Nut weggerichtet verjüngen.

Aufgrund der in die Nut 20 eingeführten Endabschnitte 31 bzw. 41 ist ein Vorpositionierwerkzeug mit Nahtschwert nicht länger notwendig. Hierdurch werden die Positionierzeiten der ersten und zweiten Haut auf dem Halteprofil 2 deutlich verkürzt. Da vor dem Einbringen der Ziernähte 5 und 6 keine stoffschlüssige Verbindung zwischen dem Halteprofil 2 und der ersten Haut 3 bzw. zweiten Haut 4 besteht, kann bei einer Fehlstellung die Naht 5 bzw. 6 jederzeit wieder gelöst werden. Eine endgültige Verbindung zwischen dem Halteprofil und der ersten bzw. zweiten Haut kann nach dem Einbringen der Fugentemperatur durch die jeweilige Haut erzeugt werden. Üblicherweise erfolgt dies nach dem Presskaschieren oder dem Membrankaschieren des Verbundteils mit einem Träger.

In der Fig. 2b ist ein weiteres Verbundteil 1' gezeigt. Das Verbundteil 1' weist das Verbundteil 1 auf, welches auf einem Träger 8 angeordnet ist. Der Träger 8, welcher aus einem Kunststoff wie z.B. Polypropylen besteht, weist eine Ausnehmung 9 auf, welche zum Halteprofil 2 korrespondierend ausgebildet ist, so dass die Oberseite 23 des ersten Flügels 21 bzw. des zweiten Flügels 22 bündig mit der Oberseite des Trägers außerhalb der Ausnehmung 9 abschließt. Auf der Sichtseite S ist ein Übergang zwischen dem Träger 8 und dem Halteprofil 2 nicht sichtbar oder spürbar. Dies bedeutet insbesondere, dass die erste Haut 3 und die zweite Haut 4 z.B. keine Aufwellungen im Bereich zwischen der Ausnehmung 9 und der restlichen Oberseite des Trägers 8 aufweisen. Die Oberseite ist hierbei die der Sichtseite S zugewandte Seite des Trägers 8.

Es sei betont, dass für sämtliche der hier gezeigten Ausführungsformen ein Beschnitt des Verbundteils / des Halteprofils möglich ist. Dies gilt insbesondere für die Ausführungsform von Fig. 1a zusätzlich zu der hier gezeigten Ausführungsform von Fig. 2a.

Die Fig. 3a zeigt ein Verbundteil 1, welches nach einer Variante des erfindungsgemäßen Verfahrens hergestellt wurde. Das Verbundteil 1 weist das Halteprofil 2, die erste Haut 3, die zweite Haut 4 sowie eine erste Naht 5 und eine zweite Naht 6 auf. Die erste Naht 5 und die zweite Naht 6 werden nachfolgend als Ziernähte bezeichnet. Weiterhin ist eine die erste Haut 3 und die zweite Haut 4 verbindende Funktionsnaht 7 gezeigt. Zuätzlich wird die erste Funktionsnaht 70 wie in der Beschreibung der Fign. 1 dargelegt eingebracht. Die erste Funktionsnaht 70 ist unterhalb der Funktionsnaht 7 angeordnet. Die Fig. 3b zeigt lediglich eine alternative Anordnung der ersten Funktionsnaht 70 und das eingesetzte Verbundteil in einem Träger 8.

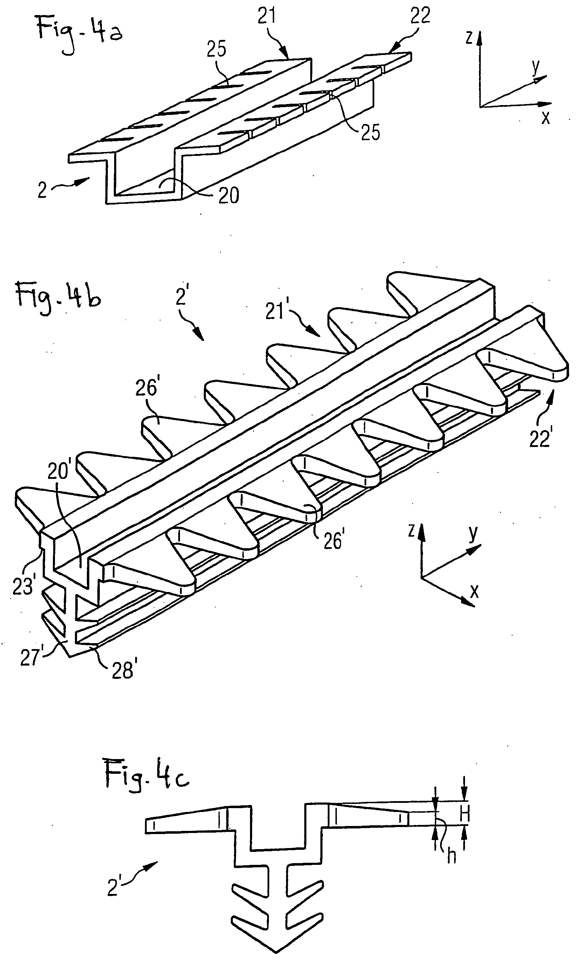

In der Fig. 4a ist das Halteprofil 2 in einer räumlichen Darstellung gezeigt. Zusätzlich zu den bereits erwähnten Merkmalen zeigen der erste Flügel 21 bzw. der zweite Flügel 22 jeweils entlang der x-Achse verlaufende Schlitze 25 auf. Durch das Einbringen der Schlitze 25 in die Flügel ist es besonders einfach, Krümmungen des aus einer ersten Haut und zweiten Haut gebildeten Überzugs zu folgen. Insbesondere können auch kleine Krümmungsradien realisiert werden. Obgleich die Nut 20 des Halteprofils 2 im Wesentlichen rechteckig ist, können auch andere Geometrien verwendet werden. So kann beispielsweise der in negativer z-Richtung liegende Boden der Nut 20 gerundet ausgebildet sein, bzw. die Seitenwände der Nut, welche sich entlang der z-Achse erstrecken, können schräg aufeinander zufallen, so dass die Nut eine Dreiecksform annimmt. Die Nut sollte dabei eine geometrische Form aufweisen, derart dass eine eventuell eingebrachte Funktionsnaht 7 von der Sichtseite her weiterhin sichtbar ist.

Eine alternative Geometrie eines Halteprofils ist in der Fig. 4b dargestellt. Das Halteprofil 2' weist eine sich in einer ersten Richtung erstreckende Nut 20' auf, wobei die Nut 20' wiederum rechteckig ist. Des Weiteren weist das Halteprofil 2' zwei sich an die Seitenwände der Nut 20' anschließende Flügel 21' bzw. 22' auf, wobei die Flügel 21' bzw. 22' eine Vielzahl von Zähnen 26' aufweisen. Die Funktion der Zähne 26' kann mit der der Schlitze 25 verglichen werden. Es ist leicht ersichtlich, dass bei einer Krümmung des Halteprofils 2' in der xy-Ebene die aufgrund der Zähne 26' vorliegenden Aussparungen der Flügel 21' bzw. 22' zu einem vereinfachten Einbringen einer Krümmung führen. Wie aus der Darstellung der Fig. 4b weiter erkennbar ist, umfassen die Flügel 21' bzw. 22' auch Teile der Seitenwände der Nut 20', was insbesondere durch den Vorsprung 23' illustriert wird. Eine in einem Träger angeordnete Ausnehmung passt sich an die entsprechende Gestaltung der Unterseite des Halteprofils an. Alternativ zu den Schlitzen können auch Rhombenausschnitte vorgesehen werden, wobei sich die Achse eines Rhombus bevorzugt entlang der zweiten Richtung erstreckt.

An die dem Boden der Nut 20' abgewandte Seite des Halteprofils 2' schließt sich ein Zapfen 27' mit Ankern 28' an. Nachdem die erste und zweite Haut in die Nut 20' eingeführt worden sind und die Teilabschnitte der ersten und zweiten Haut mit dem ersten bzw. zweiten Flügel 21' bzw. 22' verbunden worden sind, wird das Halteprofil 2' derart in einen Träger eingesetzt, dass der Zapfen 27' mit den Ankern 28' in einer zweiten Stufe einer Ausnehmung eines Trägers verankert wird. Beim Einbringen der Nähte, welche den ersten Flügel 21' und den zweiten Flügel 22' hintergreifen, können auch die zwischen zwei Zähnen 26' gelegenen Bereiche der die Zähne 26' überdeckenden ersten bzw. zweiten Haut mit der Naht versehen werden, wobei sie dort die Flügel 21' bzw. 22' nicht hintergreifen. Die Verbindung wird lediglich durch das Durchstoßen und Hintergreifen bzw. das ausschließliche Hintergreifen der Zähne 26' in anderen Abschnitten gewährleistet.

In der Fig. 4c ist das Halteprofil 2' im Querschnitt senkrecht zur ersten Richtung gezeigt. Es ist deutlich erkennbar, dass die Flügel von der Nut weggerichtet verjüngend von der Höhe H zur Höhe h zulaufen. Hierdurch wird beim Verbinden der ersten bzw. zweiten Haut für den Betrachter der Eindruck einer zweilagigen Haut erweckt. Das Halteprofil 2' ist für den Betrachter aufgrund der Überdeckung durch die erste und zweite Haut jedoch nicht sichtbar.

Jedoch kann der Flügel auch eine konstante Wandstärke aufweisen, wie beispielsweise in der Fig. 2a gezeigt.

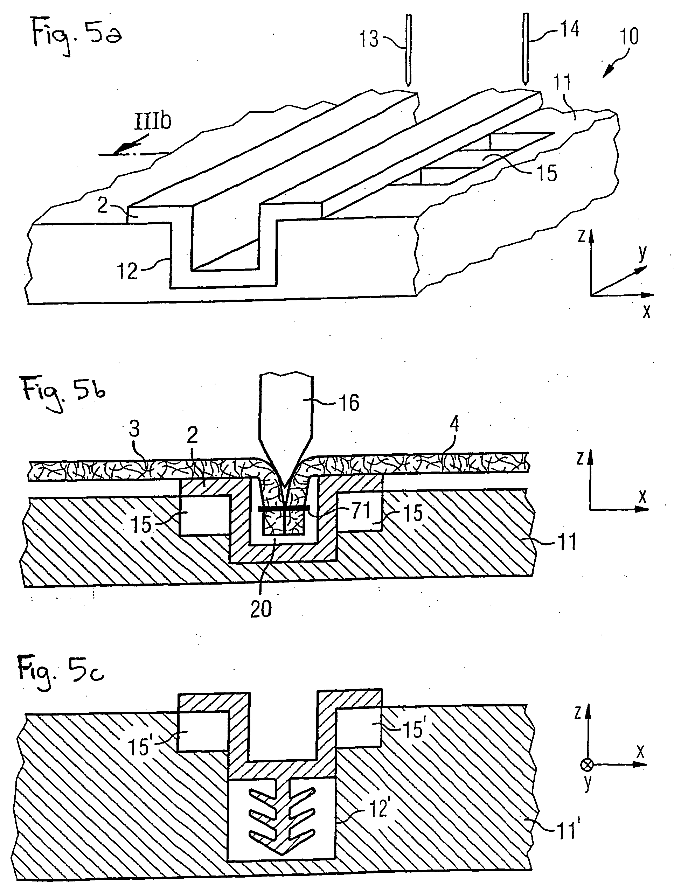

In den nachfolgenden Erläuterungen zu den Fign. 5a-c soll auf weitere Aspekte des Verfahrens, insbesondere in Verbindung mit einer Ausführungsform einer Nähvorrichtung zum Einbringen der Ziernähte in den ersten und/oder zweiten Flügel, eingegangen werden.

In der Fig. 5a ist eine Nähvorrichtung 10 gezeigt, welche eine Stichplatte 11, eine erste Nadel 13, eine zweite Nadel 14 sowie einen Transporteur 15 umfasst. Die Stichplatte 11 weist zudem einen Kanal 12 auf, in welchem beispielsweise das Halteprofil 2 gehalten und mithilfe des Transporteurs 15 geführt werden kann. Der Transporteur 15 transportiert das in dem Kanal 12 gehaltene Halteprofil 2 in Richtung der ersten und zweiten Nadel 13 bzw. 14. Das Halteprofil 2 wird derart im in z-Richtung geöffneten Kanal 12 angeordnet, dass die Nut ebenfalls in z-Richtung geöffnet ist, wobei die erste und zweite Nadel 13, 14 ebenfalls entlang der z-Richtung ausgerichtet sind. Die Flügel 21, 22 besitzen eine Breite entlang der x-Richtung und verlaufen ebenso wie die einzubringenden Nähte entlang der y-Richtung.

In der Fig. 5a ist lediglich das Halteprofil 2 ohne die erste und zweite Haut 3 bzw. 4 gezeigt. Das Vorhandensein der Häute wird in der Fig. 5b gezeigt. In der Fig. 5b, welche einen Schnitt IIIb durch das Verbundteil aus der Fig. 5a zeigt, sind das in dem Kanal 12 der Stichplatte 11 geführte Halteprofil 2 mit der noch nicht mit dem Halteprofil 2 verbundenen ersten Haut 3 bzw. zweiten Haut 4 gezeigt. Wie anhand der Fig. 5b erkennbar ist, werden die erste Haut 3 und die zweite Haut 4, welche mittels der Funktionsnaht 7 verbunden sind, mit einer Mittenführung 16 in der Nut 20 des Halteprofils 2 gehalten. Die so in der Nut 20 gehaltene erste Haut 3 und zweite Haut 4 wird mithilfe des Transporteurs 15 zusammen mit dem Halteprofil 2 in Richtung der ersten Nadel 13 bzw. der zweiten Nadel 14 gezogen. Mithilfe der ersten Nadel 13 bzw. zweiten Nadel 14 werden die dementsprechenden Nähte 5 bzw. 6 eingebracht.

Eine alternative Ausführungsform einer Stichplatte ist in der Fig. 5c gezeigt. Hierbei ist die Stichplatte 11' ebenfalls im Querschnitt zur ersten Richtung y des Halteprofils 2' dargestellt. Das in den Fign. 2b und 2c dargestellte Halteprofil 2' weist, einen Zapfen 27' mit Ankern 28' auf. Dementsprechend ist der Kanal 12' zur Führung des Halteprofils 2' tiefer ausgebildet, so dass auch der Zapfen 27' in diesem gehalten wird ohne dass der erste Flügel 21' bzw. zweite Flügel 22' von der Oberfläche der Stichplatte 11' bzw. den Transporteuren 15' abgehoben wird, d.h. die Flügel 21, 22 an der Oberfläche der Stichplatte anliegen.

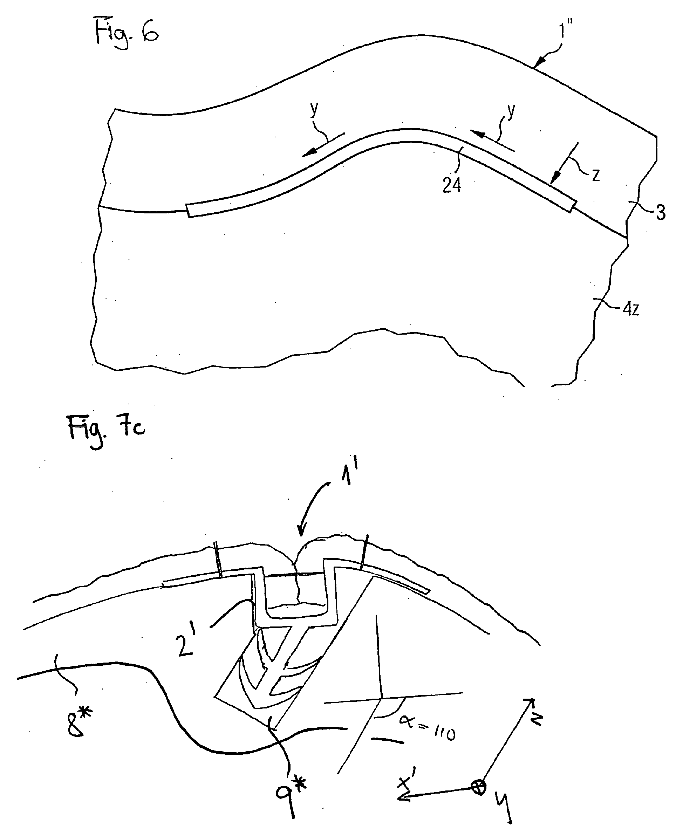

In der Fig. 6 ist die Rückseite, d. h. die nicht sichtbare Seite, einer Ausführungsvariante eines Verbundteils 1" gezeigt. Es ist die Unterseite der ersten Haut 3, die Unterseite der ersten Haut 4 sowie die Unterseite 24 des Halteprofils 2 dargestellt. Es ist deutlich erkennbar, dass das Halteprofil 2 von dem Verbund der ersten Haut 3 und der zweiten Haut 4 in der ersten Richtung y, d. h. der Richtung des Verlaufs der Nut des Halteprofils 2, überragt wird. Das so hergestellte Verbundteil 1" wird mit einem Träger verbunden, wobei der Träger eine dem geometrischen Verlauf des Halteprofils 2 des Verbundteils 1" folgende Ausnehmung aufweist. Hierdurch wird die Nahtposition in Bezug auf den Träger bestimmt und der Ausschuss weiter verringert.

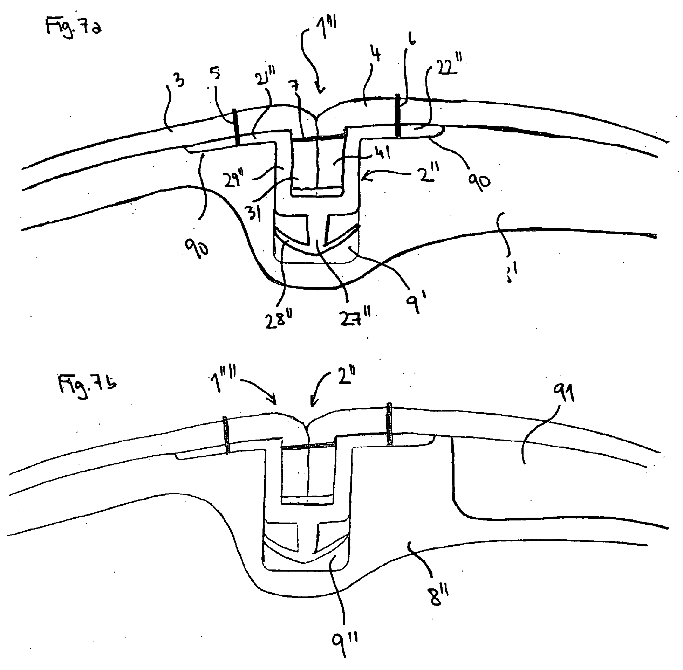

In den Fig. 7a-c werden unterschiedliche Ausführungsformen eines erfindungsgemäßen Verbundteils mit einem Halteprofil 2 wie in den Fign. 1 gezeigt, wobei jedoch die Funktionsnaht 70 nicht eingebracht ist.

Das Verbundteil 1"' der Fig. 7a umfasst einen Träger 8' aus Naturfasern, welcher eine Ausnehmung 9' zur Aufnahme des Halteprofils 2" aufweist. Soweit nicht anders bezeichnet, bezeichnen dieselben Ziffern gleiche Bestandteile wie in den Fign. 1 und 2. Nebst der Ausnehmung sind links und rechts der Ausnehmung Fräsungen 90 in der die Ausnehmung begrenzenden Oberfläche des Trägers 8' in dem Bereich vorhanden, in welchem die Flügel 21", 22" jeweils aufliegen. Hierdurch wird eine Versenkung der Flügel im Träger erreicht, so dass die Flügel nahezu bündig mit der Trägeroberfläche abschließen. Dabei müssen die Fräsungen nicht exakt planar sein, da die vergleichsweise große Auflagefläche der Unterseite des Flügels Unebenheiten ausgleicht bzw. korrigiert. Auch ohne Fräsung wird bereits ein zufrieden stellendes Ergebnis erreicht.

Das Halteprofil besteht aus einem einstückig extrudierten Kunststoffprofil der Shore A Härte von 55, die erste und zweite Haut 3, 4 bestehen jeweils aus Leder. Zwischen dem Träger und der Haut ist keine weitere Schicht angeordnet. Allerdings kann auch eine zusätzliche Schaumschicht als auf der Oberfläche des Trägers angeordnet sein. Geeignete Trägermaterialien sind Kunststoffe wie Polypropylen (PP) oder glasfaserverstärktes PP (PPLGF), Naturfaserwerkstoffe oder PUR-Schäume.

In der Fig. 7b ist eine Variante eines Trägers 8" eines Verbundteils 1"" gezeigt, welcher außerhalb des Bereichs der Ausnehmung mit einem Abstandsgewirke 91 versehen ist. Der Träger 8" selbst besteht aus einer Naturfaser/Kunststoffmischung. Im Bereich der Ausnehmung 9" ragt die Naturfaser/Kunststoffmischung bis an die sichtseitige Oberfläche des Trägers, um eine ausreichende Stabilität der Ausnehmung beim Eindrücken des Halteprofils in die Ausnehmung zu gewährleisten. Somit liegt zumindest eine Teilfläche des Unterseite der Flügel direkt auf der Naturfaser/Kunststoffmischung des Trägers auf.

In der Fig. 7c ist eine weitere Variante eines Trägers 8* gezeigt. Ein Teil der Ausnehmung 9* befindet sich in einem Winkel von α=110° (Entformungswinkel) zur Oberfläche des Trägers , wobei das Halteprofil 2' im Bereich zwischen dem Anker und dem Boden abgewinkelt ist, um mit Hilfe der Flügel eine stetig gekrümmte sichtseitige Oberfläche des Verbundteils zu schaffen, welche durch einen Betrachter als stetig und gleichmäßig wahrgenommen wird.

Das erfindungsgemäße Profil ist geeignet um Winkel zwischen der Oberfläche und einem Teil der Ausnehmung von α=90°+/-30° im obigen Sinne auszugleichen.

Die Fig. 7c offenbart auch, dass eine zweite zur ersten Richtung y stehende Richtung x' entlang welcher sich die Flügel erstrecken, nicht senkrecht zur Spiegel-Symmetrieachse des Halteprofils, d.h. zur dritten Richtung z stehen muss, sondern gemäß der Oberflächenbeschaffenheit, d.h. der Krümmung des Verbundteils angepasst werden kann.

Die Länge eines Halteprofils bzw. der Entformungswinkel der Ausnehmung des Trägers ist auch abhängig von der Materialwahl des Trägers. Wird als Material ein Kunststoff wie bspw. PPLGF gewählt, so kann das Halteprofil bzw. ein Zapfen des Halteprofils bis zu 3, vorzugsweise 2 übereinanderliegende Anker aufweisen und der Zapfen eine Länge zwischen 3 mm und 10 mm aufweisen. Dementsprechend wird die Tiefe der Ausnehmung des Trägers gewählt, welche größer als die zusammengesetzte Länge des Zapfen und der Tiefe der Nut des Halteprofils ist. Der Entformungswinkel kann zwischen 90°+/-30° liegen.

Wird als Trägermaterial, in welches die Ausnehmung eingebracht wird, ein nachwachsender Rohstoff wie Holz, Hanf, Sisal oder Flachs oder eine Mischung daraus gewählt (wobei der Rohstoff mit duroplastischen oder thermoplastischen Kunststoffen gebunden wird), so weist das Halteprofil bevorzugt lediglich einen Anker auf, wobei der Zapfen eine Länge zwischen 2 mm und 6 mm aufweist und die Tiefe der Ausnehmung entsprechend dazu gewählt wird. Dementsprechend wird die Tiefe der Ausnehmung des Trägers gewählt, welche größer als die zusammengesetzte Länge des Zapfen und der Tiefe der Nut des Halteprofils ist. Der Entformungswinkel kann zwischen 90°+/-15° liegen. Die Massenbelegung des Trägers beträgt unter 3000 g/m^2, vorzugsweise unter 2000 g/m^2, besonders vorzugsweise zwischen 900 g/m^2 und 1400 bzw. 1800 g/m^2.

## Patentansprüche

1. Halteprofil (2; 2') mit einer durch Seitenwände (29; 29') und einen Boden (24) begrenzten Nut (20; 20') zum Positionieren einer ersten und einer zweiten Haut (3, 4), wobei sich die Nut (20) in einer ersten Richtung (y) erstreckt und wobei sich an die der Nut abgewandten Seite des Bodens (24) ein Zapfen anschließt,
wobei sich ein erster Flügel (21; 21') an die erste Seitenwand und ein zweiter Flügel (22; 22') an die zweite Seitenwand anschließt und sich die Flügel entlang einer im Wesentlichen senkrecht zur ersten Richtung stehenden zweiten Richtung (x) erstrecken, wobei sich der erste und zweite Flügel (21, 22; 21', 22') vom offenen Ende der Nut entlang der zweiten Richtung (x) erstrecken, **dadurch gekennzeichnet, dass** ein Teilabschnitt (32) der
ersten Haut (3) mit einem ersten (21; 21') der mindestens zwei Flügel des Halteprofils (2; 2') mittels einer ersten mindestens ein Garn umfassenden Naht (5) verbunden ist und/oder
ein Teilabschnitts (42) der zweiten Haut (4) mit einem zweiten (22; 22') der mindestens zwei Flügel des Halteprofils (2; 2') mittels einer zweiten mindestens ein Garn umfassenden Naht (6) verbunden ist.

2. Halteprofil nach Anspruch 1, **dadurch gekennzeichnet, dass** der Zapfen (27') mindestens einen Anker (28') aufweist.

3. Halteprofil nach einem der vorhergehenden Ansprüche, **dadurch gekennzeichnet, dass** der erste und zweite Flügel eine Flügelstärke (21, 22; 21', 22') zwischen 0,05 mm und 1 mm, vorzugsweise zwischen 0,2 mm und 0,6 mm aufweist und die Wandstärke des ersten oder zweiten Flügels vorzugsweise im Wesentlichen konstant ist.

4. Verfahren zur Herstellung eines Verbundteils (1; 1'; 1"; 1"'; 1""), welches folgenden Schritt umfasst:
a) Einführen eines Endabschnitts (31) einer ersten Haut (3) und eines Endabschnitts (41) einer zweiten Haut (4) in eine sich entlang einer ersten Richtung (y) erstreckenden, durch Seitenwände (29; 29') und einen Boden (24) begrenzten Nut (20; 20') eines Halteprofils (2; 2'), welches mindestens zwei Flügel (21, 22; 21', 22') aufweist, die sich an die Seitenwände anschließen und die sich von einem offenen Ende der Nut entlang einer im Wesentlichen senkrecht zur ersten Richtung stehenden zweiten Richtung (x) erstrecken; **gekennzeichnet durch** den weiteren Schritt:
b) Verbinden eines an den Endabschnitt (31) anschließenden Teilabschnitts (32) der
ersten Haut (3) mit einem ersten (21; 21') der mindestens zwei Flügel des Halteprofils (2; 2') mittels einer ersten mindestens ein Garn umfassenden Naht (5), und/oder Verbinden eines an den Endabschnitt (41) anschließenden Teilabschnitts (42) der zweiten Haut (4) mit einem zweiten (22; 22') der mindestens zwei Flügel des Halteprofils (2; 2') mittels einer zweiten
mindestens ein Garn umfassenden Naht (6).

5. Verfahren nach Anspruch 4, **dadurch gekennzeichnet, dass** die erste und die zweite Haut (3, 4) mit einer zwischen dem jeweiligen Teilabschnitt (32, 42) und dem jeweiligen Endabschnitt (31, 41) angeordneten Funktionsnaht (7) miteinander verbunden werden, vorzugsweise vor dem Einführen der Endabschnitte (31, 41) in die Nut (20; 20') miteinander verbunden werden.

6. Verfahren nach einem der Ansprüche 4 oder 5, **dadurch gekennzeichnet, dass** die Endabschnitte (31, 41) der ersten und zweiten Haut (3, 4) eine Länge zwischen 0,5 mm und 3 mm aufweisen.

7. Verfahren nach einem der Ansprüche 4 bis 6, **dadurch gekennzeichnet, dass** die erste und zweite mit dem Halteprofil (2; 2') verbundene Haut (3, 4) das Halteprofil (2; 2') in der ersten Richtung (y) betrachtet überragen.

8. Verfahren nach einem der Ansprüche 4 bis 7, **dadurch gekennzeichnet, dass** nach dem Einbringen der ersten Funktionsnaht (70) in die Nut (20; 20') das Halteprofil in eine Ausnehmung (9) eines Trägers (8) eingesetzt wird und das Halteprofil (2; 2') vorzugsweise formschlüssig und/oder stoffschlüssig mit dem Träger (8) verbunden wird.

9. Verfahren nach einem der Ansprüche 4 bis 8, **dadurch gekennzeichnet, dass** das Halteprofil (2; 2') aus einem Kunststoff besteht, welcher eine Shore A Härte zwischen 25 und 100, vorzugsweise zwischen 50 und 100, aufweist.

10. Verfahren nach einem der Ansprüche 4 bis 9, **dadurch gekennzeichnet, dass** die erste und/oder zweite Haut (3, 4) aus einem Leder, einem Kunstleder, einem Kunststoff, einem Gewebe oder einem Gewirke besteht.

11. Verfahren nach einem der Ansprüche 4 bis 10, **dadurch gekennzeichnet, dass** das Halteprofil und optional Teile der Endabschnitte in einem definierten Abstand zum Verlauf der ersten Funktionsnaht gekürzt werden.

12. Verbundteil (1; 1'; 1"; 1"'; 1"") mit einer ersten Haut (3), einer zweiten Haut (4) und einem mit der ersten und zweiten Haut mittels einer Naht (70) verbundenen Halteprofil (2; 2'), wobei
das Halteprofil (2; 2') eine sich in einer ersten Richtung (y) erstreckende, durch Seitenwände (29; 29') und einen Boden (24) begrenzte Nut (20; 20') aufweist, wobei ein Endabschnitt (31) der ersten Haut (3), ein Endabschnitt (41) der zweiten Haut (4) und die Naht, welche als vorzugsweise mindestens ein Garn umfassende erste Funktionsnaht (70) ausgebildet ist, in der Nut (20; 20') angeordnet sind,
wobei das Halteprofil mindestens einen, vorzugsweise zwei, Flügel aufweist, wobei sich der mindestens eine Flügel an die erste Seitenwand anschließt und sich von einem offenen Ende der Nut entlang einer im Wesentlichen senkrecht zur ersten Richtung stehenden zweiten Richtung (x) erstreckt, **dadurch gekennzeichnet, dass** ein Teilabschnitt (32) der ersten Haut (3) mit einem ersten (21; 21') der mindestens zwei Flügel des Halteprofils (2; 2') mittels einer ersten mindestens ein Garn umfassenden Naht (5) verbunden ist und/oder ein Teilabschnitt (42) der zweiten Haut (4) mit einem zweiten (22; 22') der mindestens zwei Flügel des Halteprofils (2; 2') mittels einer zweiten mindestens ein Garn umfassenden Naht (6) verbunden ist.

13. Verbundteil nach Anspruch 12, **dadurch gekennzeichnet, dass** ein Träger (9) mit einer Ausnehmung (8) umfasst ist, wobei das Halteprofil (2; 2') in die Ausnehmung (9) eingebracht ist.

14. Verbundteil nach Anspruch 13, **dadurch gekennzeichnet, dass** die Ausnehmung (9) des Trägers (8) derart ausgebildet ist, dass der mindestens eine Flügel (21, 22) ausserhalb der Ausnehmung (9) auf der Oberfläche des Trägers aufliegt.

## Claims

1. A holding profile (2; 2') with a groove (20; 20'), delimited by side walls (29; 29') and a base (24), for positioning a first and a second skin (3, 4), wherein the groove (20) extends in a first direction (y) and wherein a peg adjoins that side of the base (24) which is remote from the groove,
wherein a first wing (21; 21') adjoins the first side wall and a second wing (22; 22') adjoins the second side wall, and the wings extend along a second direction (x) which is substantially perpendicular to the first direction, wherein the first and second wings (21, 22; 21', 22') extend from the open end of the groove along the second direction (x), **characterised in that** a partial portion (32) of the first skin (3) is joined to a first (21; 21') of the at least two wings of the holding profile (2; 2') by means of a first seam (5) comprising at least one yarn, and/or
a partial portion (42) of the second skin (4) is joined to a second (22; 22') of the at least two wings of the holding profile (2; 2') by means of a second seam (6) comprising at least one yarn.

2. A holding profile according to Claim 1, **characterised in that** the peg (27') has at least one anchor (28').

3. A holding profile according to one of the preceding claims, **characterised in that** the first and second wings have a wing thickness (21, 22; 21', 22') of between 0.05 mm and 1 mm, preferably of between 0.2 mm and 0.6 mm, and the wall thickness of the first or second wing is preferably substantially constant.

4. A method for producing a composite part (1; 1'; 1"; 1"'; 1""), which comprises the following step:
a) introducing an end portion (31) of a first skin (3) and an end portion (41) of a second skin (4) into a groove (20; 20'), extending along a first direction (y) and delimited by side walls (29; 29') and a base (24), of a holding profile (2; 2') which has at least two wings (21, 22; 21', 22') which adjoin the side walls and which extend from an open end of the groove along a second direction (x) substantially perpendicularly to the first direction; **characterised by** the further step:
b) joining a partial portion (32) of the first skin (3) which adjoins the end portion (31) to a first (21; 21') of the at least two wings of the holding profile (2; 2') by means of a first seam (5) comprising at least one yarn, and/or joining a partial portion (42) of the second skin (4) which adjoins the end portion (41) to a second (22; 22') of the at least two wings of the holding profile (2; 2') by means of a second seam (6) comprising at least one yarn.

5. A method according to Claim 4, **characterised in that** the first and the second skin (3, 4) are joined together with a functional seam (7) arranged between the respective partial portion (32, 42) and the respective end portion (31, 41), preferably are joined together before the introduction of the end portions (31, 41) into the groove (20; 20').

6. A method according to one of Claims 4 or 5, **characterised in that** the end portions (31, 41) of the first and second skin (3, 4) have a length of between 0.5 mm and 3 mm.

7. A method according to one of Claims 4 to 6, **characterised in that** the first and second skin (3, 4) which are joined to the holding profile (2; 2') extend beyond the holding profile (2; 2') when viewed in the first direction (y).

8. A method according to one of Claims 4 to 7, **characterised in that** after the introduction of the first functional seam (70) into the groove (20; 20') the holding profile is inserted into a recess (9) in a support (8) and the holding profile (2; 2') is joined to the support (8) preferably in a positively locking manner and/or in a material-to-material bond.

9. A method according to one of Claims 4 to 8, **characterised in that** the holding profile (2; 2') consists of a plastics material which has a Shore A hardness of between 25 and 100, preferably of between 50 and 100.

10. A method according to one of Claims 4 to 9, **characterised in that** the first and/or second skin (3, 4) consists of a leather, an imitation leather, a plastics material, a woven fabric or a knitted fabric.

11. A method according to one of Claims 4 to 10, **characterised in that** the holding profile and optionally parts of the end portions are shortened at a defined distance from the path of the first functional seam.

12. A composite part (1; 1'; 1"; 1"'; 1"") with a first skin (3), a second skin (4) and a holding profile (2; 2') which is joined to the first and second skin by means of a seam, wherein
the holding profile (2; 2') has a groove (20; 20') which extends in a first direction (y), which groove is delimited by side walls (29; 29') and a base (24), wherein an end portion (31) of the first skin (3), an end portion (41) of the second skin (4) and the seam, which is formed as a first functional seam (70) preferably comprising at least one yarn, are arranged in the groove (20; 20'),
wherein the holding profile has at least one, preferably two, wing(s), wherein the at least one wing adjoins the first side wall and extends from an open end of the groove along a second direction (x) substantially perpendicular to the first direction, **characterised in that** a partial portion (32) of the first skin (3) is joined to a first (21; 21') of the at least two wings of the holding profile (2; 2') by means of a first seam (5) comprising at least one yarn and/or a partial portion (42) of the second skin (4) is joined to a second (22; 22') of the at least two wings of the holding profile (2; 2') by means of a second seam (6) comprising at least one yarn.

13. A composite part according to Claim 12, **characterised in that** a support (9) with a recess (8) is comprised, wherein the holding profile (2; 2') is introduced into the recess (9).

14. A composite part according to Claim 13, **characterised in that** the recess (9) of the support (8) is formed such that the at least one wing (21, 22) lies outside the recess (9) on the surface of the support.

## Revendications

1. Profilé de maintien (2 ; 2') avec une rainure (20 ; 20') limitée par des parois latérales (29 ; 29') et un fond (24), pour le positionnement d'une première et d'une deuxième membrane (3, 4), la rainure (20) s'étendant dans une première direction (y) et un axe étant raccordé au côté du fond (24) opposé à la rainure,
une première ailette (21 ; 21') prolongeant la première paroi latérale et une deuxième ailette (22 ; 22') prolongeant la deuxième paroi latérale et les ailettes s'étendant le long d'une deuxième direction (x) globalement perpendiculaire à la première direction, la première et la deuxième ailette (21, 22 ; 21', 22') s'étendant de l'extrémité ouverte de la rainure le long de la deuxième direction (x), **caractérisé en ce qu'**une portion (32) de la
première membrane (3) est reliée avec une première (21 ; 21') des au moins deux ailettes du profilé de maintien (2 ; 2') au moyen d'au moins une couture (5) comprenant au moins un fil et/ou
une portion (42) de la deuxième membrane (4) est reliée avec une deuxième (22, 22') de l'au moins deux ailettes du profilé de maintien (2 ; 2') au moyen d'une deuxième couture (6) comprenant au moins un fil.

2. Profilé de maintien selon la revendication 1, **caractérisé en ce que** l'axe (27') comprend au moins un ancrage (28').

3. Profilé de maintien selon l'une des revendications précédentes, **caractérisé en ce que** la première et la deuxième ailette présentent une épaisseur d'ailette (21, 22 ; 21', 22') entre 0,05 mm et 1 mm, de préférence entre 0,2 mm et 0,6 mm et l'épaisseur de paroi de la première et de la deuxième ailette est de préférence essentiellement constante.

4. Procédé de fabrication d'un élément composite (1 ; 1' ; 1" ; 1'" ; 1"") qui comprend les étapes suivantes :
a) introduction d'une portion d'extrémité (31) d'une première membrane (3) et d'une portion d'extrémité (41) d'une deuxième membrane (4) dans une rainure (20 ; 20') s'étendant le long d'une première direction (y) et limitée par des parois latérales (29 ; 29') et un fond (24), d'un profilé de maintien (2 ; 2'), qui comprend au moins deux ailettes (21, 22 ; 21', 22'), qui prolongent les parois latérales et qui s'étendent d'une extrémité ouverte de la rainure, le long de la deuxième direction (x) perpendiculairement à la première direction ;
**caractérisé par** l'étape supplémentaire suivante :
b) liaison d'une portion (32), prolongeant la portion d'extrémité (31), de la
première membrane (3) avec une première (21 ; 21') des au moins deux ailettes du profilé de maintien (2 ; 2') au moyen d'une première couture (5) comprenant au moins un fil, et/ou
liaison d'une portion (42), prolongeant la portion d'extrémité (41), de la deuxième membrane (4) avec une deuxième (22 ; 22') des au moins deux ailettes du profilé de maintien (2 ; 2') au moyen d'une deuxième couture (6) comprenant au moins un fil (6).

5. Procédé selon la revendication 4, **caractérisé en ce que** la première et la deuxième membranes (3, 4) sont reliées entre elles avec une couture fonctionnelle (7) disposée entre leurs portions (32, 42) respectives et leurs portions d'extrémité (31, 41) respectives, de préférence avant l'introduction des portions d'extrémité (31, 41) dans la rainure (20 ; 20').

6. Procédé selon l'une des revendications 4 ou 5, **caractérisé en ce que** les portions d'extrémité (31, 41) de la première et de la deuxième membranes (3, 4) présentent une longueur entre 0,5 mm et 3 mm.

7. Procédé selon l'une des revendications 4 à 6, **caractérisé en ce que** la première et la deuxième membranes (3, 4), reliées avec le profilé de maintien (2 ; 2'), dépassent du profilé de maintien (2 ; 2') dans la première direction (y).

8. Procédé selon l'une des revendications 4 à 7, **caractérisé en ce que**, après l'introduction de la première couture fonctionnelle (70) dans la rainure (20 ; 20'), le profilé de maintien est inséré dans un évidement (9) d'un support (8) et le profilé de maintien (2 ; 2') est relié, de préférence par complémentarité de forme et/ou par liaison de matière avec le support (8).

9. Procédé selon l'une des revendications 4 à 8, **caractérisé en ce que** le profilé de maintien (2 ; 2') est constitué d'une matière plastique qui présente une dureté Shore A entre 25 et 100, de préférence entre 50 et 100.

10. Procédé selon l'une des revendications 4 à 9, **caractérisé en ce que** la première et/ou la deuxième membrane (3, 4) est constituée d'un cuir, d'un cuir artificiel, d'une matière plastique, d'un tissu ou d'un tricot.

11. Procédé selon l'une des revendications 4 à 10, **caractérisé en ce que** le profilé de maintien et des parties optionnelles des portions d'extrémité sont raccourcies à une distance définie par rapport à l'extension de la première couture fonctionnelle.

12. Élément composite (1 ; 1' ; 1" ; 1"'1 ; 1"") avec une première membrane (3), une deuxième membrane (4) et un profilé de maintien (2 ; 2') relié avec la première et la deuxième membranes au moyen d'une couture (70),
le profilé de maintien (2 ; 2') comprenant une rainure (20; 20') s'étendant dans une première direction (y) et limitée par des parois latérales (29 ; 29') et un fond (24), une portion d'extrémité (31) de la première membrane (3), une portion d'extrémité (41) de la deuxième membrane (4) et la couture, qui est conçue de préférence comme une première couture fonctionnelle (70) comprenant au moins un fil, étant disposées dans la rainure (20 ; 20'),
le profilé de maintien comprenant au moins deux ailettes, une ailette prolongeant la première paroi latérale et s'étendant de l'extrémité ouverte de la rainure le long d'une deuxième direction (x) essentiellement perpendiculaire à la première direction, **caractérisé en ce que**
une portion (32) de la première membrane (3) est reliée avec une première (21 ; 21') des au moins deux ailettes du profilé de maintien (2 ; 2') au moyen d'une première couture (5) comprenant au moins un fil et/ou
une portion (42) de la deuxième membrane (4) est reliée avec une deuxième (22 ; 22') des au moins deux ailettes (2 ; 2') au moyen d'une couture (6) comprenant au moins un fil.

13. Élément composite selon la revendication 12, **caractérisé en ce qu'**un support (9) comprend un évidement (8), le profilé de maintien (2 ; 2') étant inséré dans l'évidement (9).

14. Élément composite selon la revendication 12, **caractérisé en ce que** l'évidement (9) du support (8) est conçu de façon à ce que l'au moins une ailette (21, 22) s'appuie à l'extérieur de l'évidement (9) contre la surface du support.
